# EUROPEAN PATENT SPECIFICATION

(11) **EP 3 574 208 B1**
(45) Date of publication and mention of the grant of the patent: **10.06.2020**
(21) Application number: 17811928.5
(22) Date of filing: 06.12.2017
(51) Int. Cl.: F03B 3/02, F03B 11/00

(54) **RADIAL FLOW RUNNER FOR A HYDRAULIC MACHINE**
LÄUFER FÜR EINE HYDRAULISCHE MACHINE MIT RADIALER STRÖMUNG
ROUE POUR UNE MACHINE À FLUX RADIAL

(30) Priority: 24.01.2017 US 201762449835 P; 14.06.2017 US 201762519472 P
(43) Date of publication of application: 04.12.2019
(73) Proprietor: Voith Patent GmbH, 89522 Heidenheim (DE)
(72) Inventor: COULSON, Stuart, Seven Valleys, PA 17360 (US); DUNBAR, Kenneth, Manchester 17345 (US); KOTZMAN, Benjamin, New Oxford 17350 (US); SEIFARTH, John, York 17408 (US); MC GINNIS, Daniel, Hanover 17331 (US)
(74) Representative: Voith Patent GmbH - Patentabteilung
(86) International application number: PCT/EP2017/081659
(87) International publication number: WO 2018/137821

(56) References cited:
- JP-A- S5 920 572
- JP-A- 2002 235 652
- JP-A- 2007 154 667
- JP-A- 2011 137 407
- US-A- 5 823 740

## Description

The present invention relates generally to hydroelectric turbine or pump installations comprising a radial flow runner of the Francis type.

Hydraulic machines comprising a radial flow runner of the Francis type are suffering from axial thrust applied to the runner of the hydraulic machine. Since the sealing between the runner and the high pressure side of the water passage cannot be made perfectly tight, water can get in the space between the head cover of the hydraulic machine and the runner crown resulting in a high axial thrust. To reduce the axial thrust prior art has proposed several concepts. One concept comprises balancing pipes draining the water passing the seals to the low pressure side of the water passage (see e.g. US 1,820,150 to Moody). Another concept comprises balance holes within the runner crown leading to the runner hub or to the space between the blades of the runner (see e.g. US 4,086,020 to Seiichi and Syoji). Balancing pipes are expensive. The effectiveness of the prior art balancing holes depends on the revolution speed of the runner and the blade geometry and therefore leading not always to satisfactory results concerning thrust reduction. Especially in the case of modernization projects when an existing runner relying on balancing holes has to be replaced by a new runner the situation can occur that the modern blade geometry cannot be accommodated by balancing holes of the known type and the installation of balancing pipes is impractical since the existing hydraulic machine is embedded in concrete. It is desirable in many modernization projects to have new runners with blades which extend closer to the axis of rotation at the trailing edge near runner crown. This geometry provides improved performance characteristics but in many cases makes the use of balancing holes in the runner crown less effective at reducing thrust due to radial pumping effects within the runner crown space below the shaft flange. In some cases where the flange connecting the runner to the shaft is at a relatively low elevation, there may no longer be sufficient space available in the runner crown flange to accommodate balancing holes of the known type and so an alternative solution for thrust reduction is necessary.

JP 2007 154667 A discloses a runner of Francis type for a hydraulic turbine or pump, comprising a low and a high pressure side, a crown, a plurality of blades, each blade being defined by a pressure surface, an oppositely facing suction surface, an edge adjoining the high pressure side and a spaced apart edge adjoining the low pressure side of the runner, whereas the runner comprises at least one passage being capable to drain high pressure leakage water to the low pressure side, and the passage comprises an inlet aperture located in a portion of the crown which during operation is exposed to high pressure leakage water. The passage is located within the runner crown. JP S59 20572 A is a similar document.

US 5 823 740 A discloses a Francis turbine with passages integrally formed within a blade being for a flow of gas as air.

JP 2011 137407 A discloses passages within a blade for reducing the thrust. The passages have openings formed at the rear edges of the runner vanes. JP 2002 235652 A is a similar document.

The objective of the present invention is to propose an alternative concept for reducing the axial thrust being less expensive than balancing pipes and easily applicable within modernization projects.

This objective is achieved by a runner according to claim 1. Other favorable implementations of the invention are disclosed in the depended claims.

The inventors have recognized that the axial thrust can be reduced by a runner comprising at least one passage leading from the runner crown to the trailing edge of at least one of the runner blades. The inventors have also recognized that having leakage water exiting the trailing edge may reduce drag forces as the runner rotates and result in an improvement in hydraulic efficiency.

The invention will hereinafter be described in conjunction with the appended drawings:
Fig. 1 is a cross-sectional view of a Francis turbine runner according to the present invention;
Fig. 2 is a cross-sectional view of a runner blade according to an embodiment of the present invention;
Fig. 3 shows section A and different kinds of embodiments of section B of the runner blade according to Figure 2;
Fig. 4 is a cross-sectional view of a runner blade according to another embodiment of the present invention;
Fig. 5 shows section A of the runner blade according to Figure 4;
Fig. 6 is a cross-sectional view of a runner blade according to another embodiment of the present invention.

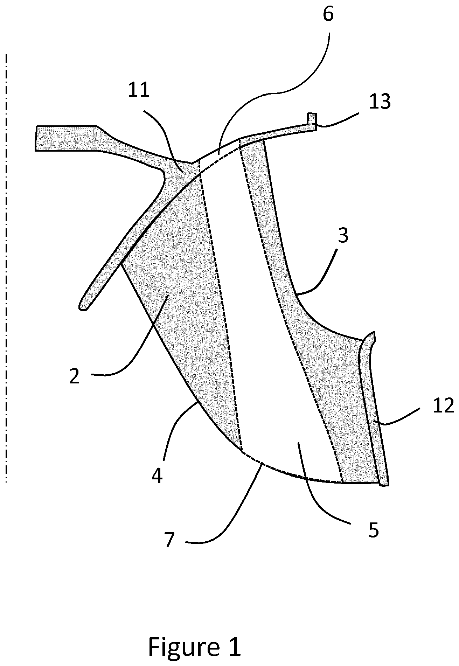

Figure 1 displays schematically a cross-sectional view of a Francis turbine runner according to the present invention. The runner crown is designated as 11. A runner blade 2 extends between the crown 11 and the band designated as 12. The blade 2 has two edges designate by 3 and 4. The fluid entering the runner flows from edge 3 towards edge 4, whereas the high pressure side adjoins to edge 3 and the low pressure side adjoins to edge 4. It is clear that in pumping mode the flow direction of the fluid is reversed. The runner crown 11 comprises circumferential located sealing means designated as 13. Sealing means 13 are construed to seal the space above crown 11 against high pressure water. However due to the imperfection of the sealing a small amount of high pressure water will be present in the space above the runner crown 11 leading to the undesired axial thrust. The runner crown 11 comprises an inlet aperture designated by 6. The inlet aperture 6 is located in a portion of the crown, which is exposed to high pressure water passing the sealing means 13. The blade 2 comprises a passage designated by 5. The passage 5 leads from inlet aperture 6 to a portion of edge 4 adjoining the low pressure side where the passage 5 forms an opening which is designated by 7. The axial thrust is relieved by draining the leakage water from the space above crown 11 directly through the passage 5 inside blade 2 to the low pressure side. Since opening 7 is located in the edge 4 directly adjoining the low pressure side the thrust is relieved to a high degree. In a preferred embodiment of the invention, the location of the opening 7 is at an equal or larger radial distance from the axis of rotation than the inlet aperture 6. This avoids backpressure due to the radial pumping effect of rotation. Therefore the runner according to the invention relieves the thrust to lower values compared with the runner of US 4,086,020 because the balancing holes of US 4,086,020 leading to the hub and the space between the blades do not adjoin directly to the low pressure side of the runner. The radial pumping effect within the hub of US 4,086,020 is significant and results in higher pressure above the runner and consequently higher axial downthrust.

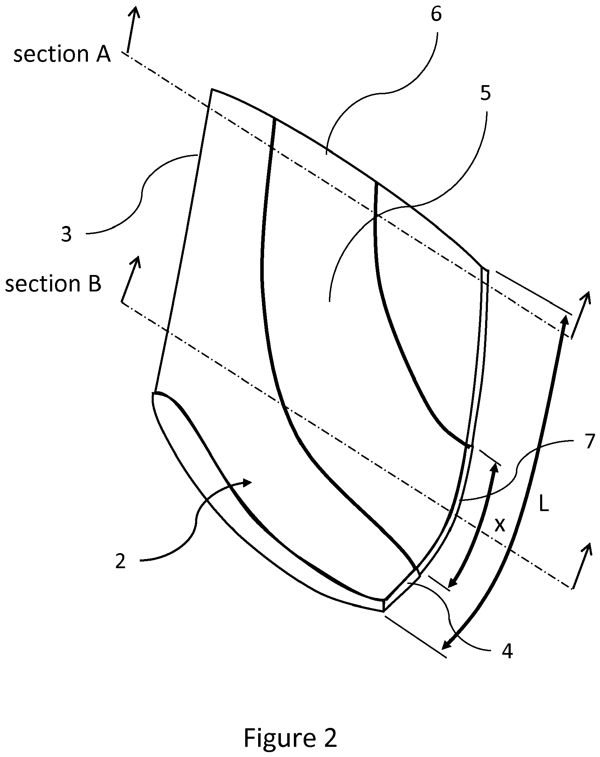

Figure 2 displays schematically a cross-sectional view of a runner blade according to present invention. The blade is designated as 2. The blade 2 has an edge 3 adjoining the high pressure side and an edge 4 adjoining the low pressure side. The fluid flow is divided by the blade 2 whereas one side of the blade 2 forms the pressure surface and the other side the suction surface. The blade 2 shown in figure 2 contains a passage which is designated as 5. The blade 2 has an inlet apertures designated as 6. At the edge 4, there is a continuous opening designated as 7. The continuous opening 7 extends preferably over at least 15% of the developed length of the edge 4 (x/L >= 0.15). The extension of the continuous opening 7 over a relatively large area of the edge 4 ensures that the leakage high pressure water can pass easily to the low pressure side for a wide range of revolution numbers leading to a low axial thrust for all operation modes. Inlet aperture 6, passage 5 and the continuous opening 7 are forming a smooth passage through the blade minimizing losses as the leakage water flows through the blade.

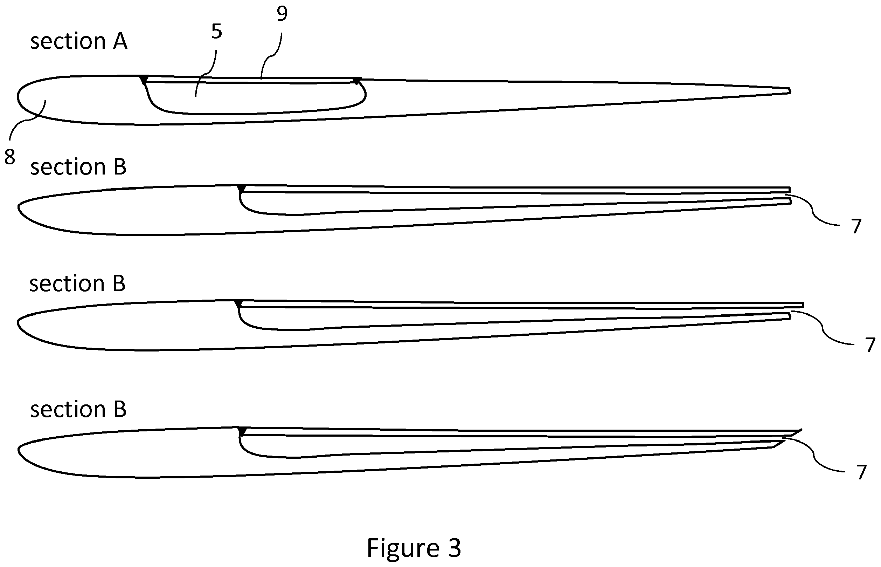

Figure 3 displays schematically cross-sectional views through the blade 2 of figure 2 along the marked sections A and B. Figure 3 displays three different embodiments of the continuous opening 7 which is displayed in three different views along section B. In the view along section A it can be seen that the blade 2 comprises a base part which is designated by 8 and a cover part which is designated by 9. The base part 8 includes either the entire suction side or pressure side surface of the blade as well as the entire surface of the edge adjoining the high pressure side and a substantial portion of the surface of the edge adjoining the low pressure side. A cavity is machined or cast into the base part 8. The thinner cover part 9 is attached to the base part 8 thus forming the gas passage 5. The cover part 9 may be metal or composite material, may be cast formed or machined and may be attached by welding or by a bonding material (epoxy, glue, etc.). The topmost cross-sectional view along section B shows a first embodiment of the continuous opening 7. The continuous opening 7 is confined by the pressure and suction side surfaces which meet at the trailing edge 4. In this first embodiment the pressure and suction side surfaces are ending respectively at the same distance measured from the edge 3 adjoining the high pressure side along the section's camberline. The middle cross-sectional view along section B shows a second embodiment of the continuous opening 7. In this second embodiment the pressure side surface extends further than the suction side surface measured from the edge 3 adjoining the high pressure side along the section's camberline. The bottom cross-sectional view along section B shows a third embodiment of the continuous opening 7. In the third embodiment the edge 4 adjoining the low pressure side in the region of opening 7 is profiled to minimize vortex shedding. Of course this kind of profile can be present over the whole length of edge 4.

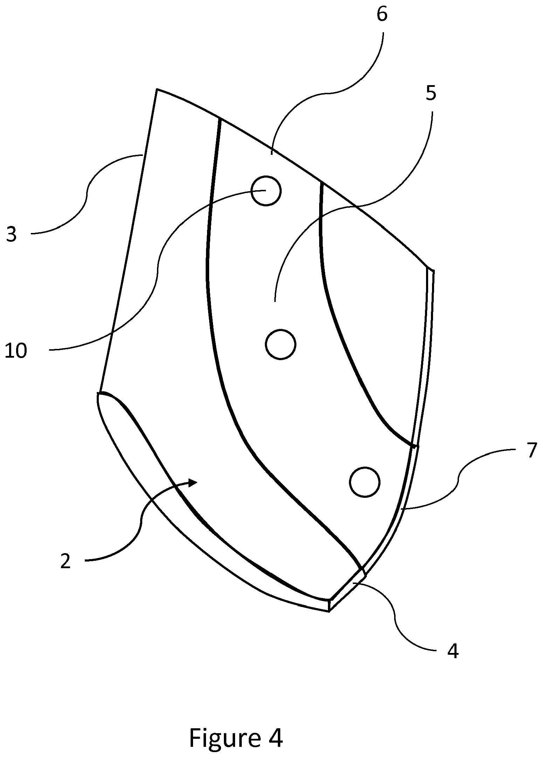

Figure 4 displays schematically a cross-sectional view of a runner blade according to present invention in another embodiment. Additionally to the blade of figure 2 the embodiment according figure 4 includes three spacer pieces one of them being designated as 10.

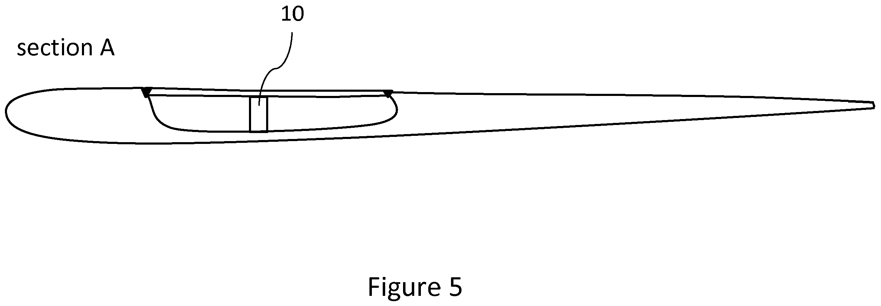

Figure 5 shows a cross-sectional view along section A displaying a side view of the spacer piece 10. Spacer pieces 10 are positioned within the passage 5 as needed to avoid the buckling of the cover part 9. The spacer pieces 10 could be integral to the base part 8 or fixedly attached to either the base part 8 or cover part 9. It is clear that the number of spacer pieces 10 is not restricted to the number of three but there can be any number of spacer pieces 10.

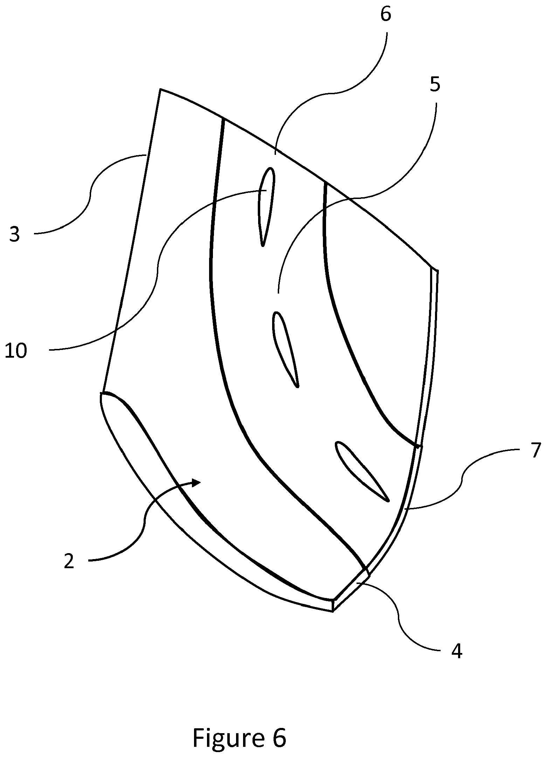

The inventors have realized that the spacer pieces 10 are forming an obstacle to the leakage water flow. Therefore it is favorable that the spacer pieces are of aerodynamic shape. Figure 6 shows the runner according to the present invention featuring aerodynamically shaped spacer pieces 10.

It is clear that the embodiments shown in the figures are examples of a much broader variety of embodiments each employing the inventive ideas. For example there could be several separate passages through one blade leading from separate inlet apertures to several separate continuous openings located at different portions of the edge adjoining the low pressure side. The different passages could also be located in different blades.

## Claims

1. A runner of Francis type for a hydraulic turbine or pump, comprising a low and a high pressure side, a crown (11), a plurality of blades (2), each blade (2) being defined by a pressure surface, an oppositely facing suction surface, an edge (3) adjoining the high pressure side and a spaced apart edge (4) adjoining the low pressure side of the runner, whereas the crown comprises sealing means (13) to seal the space above the crown (11) against water from the high pressure side, whereas the runner comprises at least one passage (5) being capable to drain high pressure leakage water passing the sealing means (13) to the low pressure side, and the passage (5) comprises an inlet aperture (6) located in a portion of the crown (11) which during operation is exposed to high pressure leakage water, **characterized in that** the passage (5) is located within a blade (2) and leads from the inlet aperture (6) to the edge (4) adjoining to the low pressure side of the same blade (2), whereas the passage (5) is shaped to form a continuous opening (7) in the same edge (4) adjoining to the low pressure side.

2. The runner of claim 1, wherein the continuous opening (7) extends over at least 15% of the developed length of the edge (4) adjoining to the low pressure side.

3. The runner of claim 1 or 2, wherein the location of the continuous opening (7) is at an equal or larger radial distance from the axis of rotation of the runner than the inlet aperture (6).

4. The runner of one of the preceding claims, wherein in the region of the continuous opening (7) the pressure side surface extends further than the suction side surface measured from the edge (3) adjoining the high pressure side along the section's camberline.

5. The runner of one of the preceding claims, wherein the blade (2) in which the passage (5) is located comprises a base part (8) and a cover part (9) where the base part (8) is of single piece construction including the entire edge (3) adjoining the high pressure side, the entire pressure side of the blade (2), as well as a portion of the surface of the edge (4) adjoining the low pressure side, and where the base part (8) contains a cavity and the cover part (9) is attached to the base part (8) above the cavity to form the passage (5).

6. The runner of one of claims 1 to 4, wherein the blade (2) in which the passage (5) is located comprises a base part (8) and a cover part (9) where the base part (8) is of single piece construction including the entire edge (3) adjoining the high pressure side, the entire suction side of the blade (2), as well as a portion of the surface of the edge (4) adjoining the low pressure side, and where the base part (8) contains a cavity and the cover part (9) is attached to the base part (8) above the cavity to form the passage (5).

7. The runner of claim 5 or 6, wherein at least one spacer piece (10) is located between the base part (8) and the cover part (9) within the passage (5).

## Patentansprüche

1. Laufrad nach Francis-Bauart für eine hydraulische Turbine oder Pumpe, umfassend eine Nieder- und eine Hochdruckseite, einen Kranz (11), mehrere Schaufeln (2), wobei jede Schaufel (2) definiert ist durch eine Druckfläche, eine in entgegengesetzte Richtung weisende Saugfläche, eine an die Hochdruckseite angrenzende Kante (3) und eine an die Niederdruckseite des Laufrads angrenzende beabstandete Kante (4), wobei der Kranz ein Dichtmittel (13) zum Abdichten des Raums über dem Kranz (11) gegen Wasser von der Hochdruckseite umfasst, wobei das Laufrad mindestens einen Durchlass (5) umfasst, der in der Lage ist, Hochdruckleckwasser, das das Dichtmittel (13) passiert, zu der Niederdruckseite abzulassen, und wobei der Durchlass (5) einen in einem Abschnitt des Kranzes (11) angeordneten Einlassdurchgang (6) umfasst, der im Betrieb Hochdruckleckwasser ausgesetzt ist, **dadurch gekennzeichnet, dass** der Durchlass (5) in einer Schaufel (2) angeordnet ist und von dem Einlassdurchgang (6) zu der an die Niederdruckseite derselben Schaufel (2) angrenzende Kante (4) führt, wobei der Durchlass (5) derart geformt ist, dass er eine durchgehende Öffnung (7) in derselben an die Niederdruckseite angrenzenden Kante (4) bildet.

2. Laufrad nach Anspruch 1, wobei sich die durchgehende Öffnung (7) über mindestens 15 % der gestreckten Länge der an die Niederdruckseite angrenzenden Kante (4) erstreckt.

3. Laufrad nach Anspruch 1 oder 2, wobei die Lage der durchgehenden Öffnung (7) in einem gleichen oder größeren radialen Abstand von der Drehachse des Laufrads als der Einlassdurchgang (6) ist.

4. Laufrad nach einem der vorhergehenden Ansprüche, wobei sich in dem Bereich der durchgehenden Öffnung (7) die Druckseitenfläche weiter erstreckt als die Saugseitenfläche, gemessen von der an die Hochdruckseite angrenzenden Kante (3) entlang der Wölbungslinie des Profils.

5. Laufrad nach einem der vorhergehenden Ansprüche, wobei die Schaufel (2), in der der Durchlass (5) angeordnet ist, einen Basisteil (8) und einen Abdeckteil (9) umfasst, wobei der Basisteil (8) von einstückiger Bauweise umfassend die gesamte an die Hochdruckseite angrenzende Kante (3), die gesamte Druckseite der Schaufel (2) sowie einen Abschnitt der Fläche der an die Niederdruckseite angrenzenden Kante (4) ist, und wobei der Basisteil (8) einen Hohlraum enthält und der Abdeckteil (9) an dem Basisteil (8) über dem Hohlraum angebracht ist, um den Durchlass (5) zu bilden.

6. Laufrad nach einem der Ansprüche 1 bis 4, wobei die Schaufel (2), in der der Durchlass (5) angeordnet ist, einen Basisteil (8) und einen Abdeckteil (9) umfasst, wobei der Basisteil (8) von einstückiger Bauweise umfassend die gesamte an die Hochdruckseite angrenzende Kante (3), die gesamte Saugseite der Schaufel (2) sowie einen Abschnitt der Fläche der an die Niederdruckseite angrenzenden Kante (4) ist, und wobei der Basisteil (8) einen Hohlraum enthält und der Abdeckteil (9) an dem Basisteil (8) über dem Hohlraum angebracht ist, um den Durchlass (5) zu bilden.

7. Laufrad nach Anspruch 5 oder 6, wobei mindestens ein Abstandsstück (10) zwischen dem Basisteil (8) und dem Abdeckteil (9) in dem Durchlass (5) angeordnet ist.

## Revendications

1. Roue du type Francis destinée à une turbine ou pompe hydraulique comprenant un côté basse pression et haute pression, une couronne (11), une pluralité d'aubes (2), chaque aube (2) étant définie par une surface de pression, une surface d'aspiration faisant face à l'opposé, un bord (3) adjacent au côté haute pression et un bord espacé (4) adjacent au côté basse pression de la roue, la couronne comprenant un moyen d'étanchéité (13) pour rendre étanche l'espace au-dessus de la couronne (11) contre l'eau provenant du côté haute pression, la roue comprenant au moins un passage (5) pouvant évacuer l'eau de fuite haute pression passant le moyen d'étanchéité (13) vers le côté basse pression, et le passage (5) comprenant une ouverture d'entrée (6) située dans une partie de la couronne (11) qui, pendant le fonctionnement, est exposée à l'eau de fuite haute pression, **caractérisée en ce que** le passage (5) est situé à l'intérieur d'une aube (2) et mène de l'ouverture d'entrée (6) au bord (4) adjacent au côté basse pression de la même aube (2), le passage (5) ayant une forme telle qu'il forme une ouverture continue (7) dans le même bord (4) adjacent au côté basse pression.

2. Roue selon la revendication 1, l'ouverture continue (7) s'étendant sur au moins 15 % de la longueur développée du bord (4) adjacent au côté basse pression.

3. Roue selon la revendication 1 ou 2, l'emplacement de l'ouverture continue (7) étant à une distance radiale égale ou plus grande, à partir de l'axe de rotation de la roue, que l'ouverture d'entrée (6).

4. Roue selon l'une des revendications précédentes, dans la région de l'ouverture continue (7), la surface côté pression s'étendant plus loin que la surface côté aspiration mesurée à partir du bord (3) adjacent au côté haute pression le long de la ligne de cambrure de la section.

5. Roue selon l'une des revendications précédentes, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté pression de l'aube (2), ainsi qu'une partie de la surface du bord (4) adjacent au côté basse pression, et la partie de base (8) contenant une cavité et la partie de couvercle (9) étant fixée à la partie de base (8) au-dessus de la cavité pour former le passage (5).

6. Roue selon l'une des revendications 1 à 4, l'aube (2), dans laquelle le passage (5) est situé, comprenant une partie de base (8) et une partie de couvercle (9), la partie de base (8) étant de construction monobloc comprenant tout le bord (3) adjacent au côté haute pression, tout le côté aspiration de l'aube (2), ainsi qu'une partie de la surface du bord (4) adjacent au côté basse pression, et la partie de base (8) contenant une cavité et la partie de couvercle (9) étant fixée à la partie de base (8) au-dessus de la cavité pour former le passage (5).

7. Roue selon la revendication 5 ou 6, au moins une pièce d'écartement (10) étant située entre la partie de base (8) et la partie de couverture (9) dans le passage (5) .
